# EUROPÄISCHE PATENTSCHRIFT

(11) **EP 2 491 088 B1**
(45) Veröffentlichungstag und Bekanntmachung des Hinweises auf die Patenterteilung: **05.07.2017**
(21) Anmeldenummer: 10770791.1
(22) Anmeldetag: 15.10.2010
(51) Int. Cl.: C09J 163/00, C08L 63/00, C08L 71/02, C08G 59/30, C08G 59/50

(54) **SCHLAGZÄHE, BEI RAUMTEMPERATUR HÄRTENDE ZWEIKOMPONENTIGE MASSE AUF EPOXIDBASIS**
IMPACT RESISTANT TWO-COMPONENT EPOXY-BASED SUBSTANCE CURING AT ROOM TEMPERATURE
MASSE À DEUX COMPOSANTS À BASE DE RÉSINE ÉPOXY DURCISSABLE À TEMPÉRATURE AMBIANTE, RÉSISTANTE AU CHOC

(30) Priorität: 21.10.2009 DE 102009045903
(43) Veröffentlichungstag der Anmeldung: 29.08.2012
(73) Patentinhaber: Henkel AG & Co. KGaA, 40589 Düsseldorf (DE)
(72) Erfinder: LAMMERSCHOP, Olaf, Danville CA 94506 (US); HOLTGREWE, Christian, 40591 Düsseldorf (DE)
(86) Internationale Anmeldenummer: PCT/EP2010/065523
(87) Internationale Veröffentlichungsnummer: WO 2011/048022

(56) Entgegenhaltungen:
- WO-A1-2009/025991
- WO-A2-2004/062869
- US-A- 3 714 115
- US-A1- 2008 319 105
- US-A1- 2009 099 312

## Beschreibung

Die vorliegende Erfindung betrifft eine verbesserte zweikomponentige härtbare Masse auf Epoxidbasis, die sich durch eine hohe Schlagfestigkeit bei tiefen Temperaturen (Temperaturen im Bereich -30°C bis -40°C) auszeichnet. Sie hat die Eigenschaften eines Strukturklebstoffs oder eines Strukturschaums und kann insbesondere zum Verkleben von Fügeteilen bei der Reparatur von Kraftfahrzeugen oder zum Verstärken und/oder Aussteifen von Hohlraumstrukturen eingesetzt werden. Sie härtet nach dem Vermischen der Komponenten bei Zimmertemperatur aus und erfordert daher keine Einrichtung zum Erwärmen der Fügeteile.

Konventionelle Klebstoffe und Schmelzklebstoffe auf Basis von Epoxidharzen sind in ausgehärtetem Zustand hart und spröde. Die mit ihnen erhaltenen Klebungen weisen zwar in aller Regel eine sehr hohe Zugscherfestigkeit auf. Bei schälender, schlagender oder schlagschälender Beanspruchung, insbesondere bei tieferen Temperaturen, platzen diese jedoch ab, so dass es bei dieser Beanspruchungsart der Klebefuge leicht zum Bindungsverlust kommt. Es hat daher bereits zahlreiche Vorschläge gegeben, Epoxidharze durch flexible Zusätze so zu modifizieren, dass ihre Sprödigkeit deutlich reduziert wird. Ein gängiges Verfahren beruht auf der Verwendung spezieller Kautschukaddukte an Epoxidharze, die als heterodisperse Phase in der Epoxidharzmatrix eingelagert sind, so dass die Epoxide schlagfester werden. Diese EpoxidharzZusammensetzungen werden auch als "toughened" oder "schlagzäh-modifiziert" bezeichnet.

Gemäß der Lehre der EP-A-0 354 498 bzw. der EP-A-0 591 307 lassen sich reaktive Schmelzklebstoffzusammensetzungen aus einer Harzkomponente, mindestens einem thermisch aktivierbaren latenten Härter für die Harzkomponente sowie gegebenenfalls Beschleuniger, Füllstoffen, Thixotropierhilfsmittel und weiteren üblichen Zusätzen herstellen, wobei die Harzkomponente durch die Umsetzung von einem bei Raumtemperatur festen Epoxidharz und einem bei Raumtemperatur flüssigen Epoxidharz mit einem oder mehreren linearen oder verzweigten Polyoxypropylen mit Amino-Endgruppen erhältlich sind. Dabei sollen die Epoxidharze in einer solchen Menge, bezogen auf das Amino-terminierte Polyoxypropylen, eingesetzt werden, dass ein Überschuss an Epoxidgruppen bezogen auf die Aminogruppen gewährleistet ist. Diese Klebstoffzusammensetzungen weisen bereits einen hohen Schälwiderstand im Winkelschälversuch auf, der auch bei tiefen Temperaturen erhalten bleibt.

WO 2007/025007 offenbart eine Zusammensetzung mit folgenden Komponenten: zumindest ein Epoxidharz, Kautschuk-Partikel mit einer Kern-Schale-Struktur, einen weiteren Schlagzähigkeits-Modifizierer bzw. Zähigkeits-Verbesserer und einen Hitzeaktivierbaren latenten Härter. Als Schlagzähigkeits-Modifizierer können unter anderen Epoxi-Präpolymere auf Basis Amin-terminierter Polyether eingesetzt werden. Als Beispiele werden Amin-terminierte Polyether auf Basis Polyoxyethylen und Polyoxypropylen genannt.

WO 2009/051699 offenbart ebenfalls Amin-terminierte "Toughener" für Epoxid-Klebstoffe. Beispielsweise kann es sich hierbei um flüssige Amin-terminierte Polyether handeln, die als einziger "Toughener" oder in Kombination mit Kern-Schale-Partikel eingesetzt werden können. Hierfür wird eine große Auswahl möglicher Verbindungen vorgeschlagen, die auch solche mit Polytetramethylenoxid-Einheiten (= Poly-THF) einschließen. Diese sind Bestandteile von Amin-terminierten Tri-Block-Polyether, wobei die anderen Blöcke aus Polypropylenoxid-Einheiten bestehen können. Die gewichtsmittlere Molmasse dieser Amin-terminierten Tri-Block-Polyether soll im Bereich von 800 bis 2000, besonders bevorzugt von 1000 bis WO-A-2009/025991 offenbart schlagzähe zweikomponentige Masse auf Epoxidbaisis. Die vorliegende Erfindung stellt sich die Aufgabe, die Schlagzähigkeit zweikomponentiger, bei Raumtemperatur härtbarer Epoxid-Strukturklebstoffe oder Strukturschäume bei tiefen Temperaturen weiter zu verbessern. Der Erfindung liegt die Erkenntnis zugrunde, dass die Lösung dieser Aufgabe die gleichzeitige Verwendung von Partikeln mit Kern-Schale-Struktur und Amin-terminierten Polyether erfordert, wobei enge Anforderungen an Aufbau und Molmasse der Amin-terminierten Polyakylenether zu stellen sind.

Die vorliegende Erfindung betrifft eine zweikomponentige härtbare Masse, enthaltend nach Mischen der beiden Komponenten:
a) mindestens ein Epoxid,
b) mindestens einen bei Raumtemperatur reaktiven Härter für das Epoxid,
c) Partikel mit Kern-Schale-Struktur,
d) mindestens einen aliphatischen Polyalkylenether, der an jedem Kettenende eine Aminogruppe trägt,
dadurch gekennzeichnet, dass die Komponente d) von der Komponente b) verschieden ist und ausgewählt ist aus Homo- oder Copolymeren von Tetrahydrofuran, die aliphatische Amino-Endgruppen tragen und die eine gewichtsmittlere Molmasse Mw (bestimmt mittels GPC mit Polyethylenglycol-Standard) von mindestens 1800, vorzugsweise mindestens 1900 und insbesondere mindestens 2000 aufweisen. Dabei wird angenommen, dass die Varianz der Molmassenbestimmungen in der Größenordnung +/- 50 bis +/- 100 liegt. Nach oben werden die geeigneten Molmassen durch die Viskosität begrenzt. Gewichtsmittlere Molmassen oberhalb von 10.000 und insbesondere oberhalb von 20.000 sind weniger geeignet. Vorteilhafterweise liegt die bevorzugte maximale gewichtsmittlere Molmasse bei etwa 6000. Die Masse kann nach dem Vermischen der beiden Komponenten beispielsweise als Klebstoff verwendet werden. Wenn Sie zusätzlich ein Treibmittel enthält, kann sie auch als Strukturschaum verwendet werden.

Die Epoxid-Prepolymere, hier auch als "Epoxidharze" oder kurz als "Epoxid" bezeichnet, können grundsätzlich gesättigte, ungesättigte, cyclische oder acyclische, aliphatische, alicyclische, aromatische oder heterocyclische Polyepoxidverbindungen sein.

Geeignete Epoxidharze im Rahmen der vorliegenden Erfindung sind beispielsweise vorzugsweise ausgewählt aus Epoxidharzen vom Bisphenol-A-Typ, Epoxidharzen vom Bisphenol-S-Typ, Epoxidharzen vom Bisphenol-F-Typ, Epoxidharzen vom Phenol-Novolak-Typ, Epoxidharzen vom Cresol-Novolak-Typ, epoxidierten Produkten zahlreicher Dicyclopentadien-modifizierter Phenolharze, erhältlich durch Umsetzung von Dicyclopentadien mit zahlreichen Phenolen, epoxidierte Produkte von 2,2',6,6'-Tetramethylbiphenol, aromatische Epoxidharze wie Epoxidharze mit Naphthalin-Grundgerüst und Epoxidharze mit Fluoren-Grundgerüst, aliphatische Epoxidharze wie Neopentylglykoldiglycidylether und 1,6-Hexandioldiglycidylether, alicyclische Epoxidharze wie 3,4-Epoxycyclohexylmethyl-3,4-epoxycyclohexancarboxylat und Bis(3,4-epoxycyclohexyl)adipat, und Epoxidharze mit einem Heteroring wie Triglycidylisocyanurat. Insbesondere umfassen die Epoxidharze zum Beispiel das Reaktionsprodukt aus Bisphenol A und Epichlorhydrin, das Reaktionsprodukt aus Phenol und Formaldehyd (Novolak-Harze) und Epichlorhydrin, Glycidyl Ester sowie das Reaktionsprodukt aus Epichlorhydrin und p-Aminophenol.

Weitere Polyphenole, die durch Umsetzung mit Epichlorhydrin (oder Epibromhydrin) geeignete Epoxidharz-Prepolymere liefern, sind: Resorcin, 1,2-Dihydroxybenzol, Hydrochinon, bis(4-hdroxyphenyl)-1,1-isobutan, 4,4'-dihydroxybenzophenon, bis(4-hydroxyphenyl)-1,1-ethan und 1,5-hydroxynaphthalin.

Weitere geeignete Epoxid-Prepolymere sind Polyglycidylether von Polyalkoholen oder Diaminen. Solche Polyglyzidylether leiten sich ab von Polyalkoholen, wie beispielsweise Ethylenglycol, Diethylenglycol, Triethylenglycol, 1,2-Propylenglycol, 1,4-Butylenglycol, Triethylenglycol, 1,5-Pentandiol, 1,6-Hexandiol oder Trimethylolpropan.

Weitere bevorzugte Epoxidharze, die kommerziell erhältlich sind, umfassen insbesondere Octadecylenoxid, Epichlorhydrin, Styroloxid, Vinylcyclohexenoxid, Glycidol, Glycidylmethacrylat, Diglycidylether von Bisphenol A (z.B. diejenigen, welche unter den Handelsbezeichnungen "Epon 828", "Epon 825", "Epon 1004" und "Epon 1010" der Hexion Specialty Chemicals Inc., "DER-331", "DER-332", "DER-334", "DER-732" und "DER⁻736" der Dow Chemical Co. erhältlich sind), Vinylcyclohexendioxid, 3,4-Epoxycyclohexylmethyl-3,4-epoxycyclohexen-carboxylat, 3,4-Epoxy-6-methylcyclohexylmethyl-3,4-epoxy-6-methyl-cyclohexencarboxylat, Bis(3,4-epoxy-6-methylcyclohexylmethyl)adipat, Bis(2,3-epoxy-cyclopentyl)ether, aliphatisches, mit Polypropylenglycol modifiziertes Epoxid, Dipentendioxid, epoxidiertes Polybutadien (z.B. Krasol Produkte von Sartomer), Epoxidfunktionalität enthaltendes Siliconharz, flammhemmende Epoxidharze (z.B. "DER-580", ein bromiertes Epoxidharz vom Bisphenol-Typ, welches von Dow Chemical Co. erhaeltlich ist), 1,4-Butandiol-diglycidylether eines Phenolformaldehyd-Novolaks (z.B. "DEN-431" und "DEN-438" der Dow Chemical Co.), sowie Resorcindiglycidylether (z.B. "Kopoxite" der Koppers Company Inc.), Bis(3,4-epoxycyclohexyl)-adipat, 2-(3,4-Epoxycyclohexyl-5,5-spiro-3,4-epoxy)cyclohexan-meta-dioxan, Vinylcyclohexenmonoxid, 1,2-Epoxyhexadecan, Alkylglycidilether wie z.B. C₈-C₁₀₋Alkyl-glycidylether (z.B. "HELOXY Modifier 7" der Hexion Specialty Chemicals Inc.), C12-C14-Alkyl-glycidylether (z.B. "HELOXY Modifier 8" der Hexion Specialty Chemicals Inc.), Butylglycidylether (z.B. "HELOXY Modifier 61" der Hexion Specialty Chemicals Inc.), Cresylglycidylether (z.B. "HELOXY Modifier 62" der Hexion Specialty Chemicals Inc.), p-tert.-Butylphenyl-glycidylether (z.B. "HELOXY Modifier 65" der Hexion Specialty Chemicals Inc.), polyfunktionelle Glycidylether wie z.B. Diglycidylether von 1,4-Butandiol (z.B. "HELOXY Modifier 67" der Hexion Specialty Chemicals Inc.), Diglycidylether von Neopentylglycol (z.B. "HELOXY Modifier 68" der Hexion Specialty Chemicals Inc.), Diglycidylether von Cyclohexandimethanol (z.B. "HELOXY Modifier 107" der Hexion Specialty Chemicals Inc.), Trimethylolethan-triglycidilether (z.B. "HELOXY Modifier 44" der Hexion Specialty Chemicals Inc.), Trimethylolpropan-triglycidylether (z.B. "HELOXY Modifier 48" der Hexion Specialty Chemicals Inc.), Polyglycidylether eines aliphatischen Polyols (z.B. "HELOXY Modifier 84" der Hexion Specialty Chemicals Inc.), Polyglycoldiepoxid (z.B. "HELOXY Modifier 32" der Hexion Specialty Chemicals Inc.), Bisphenol F-Epoxide (z.B. "EPN-1138" oder GY-281" der Huntsman Int. LLC), 9,9-Bis-4-(2,3-epoxypropoxy)-phenylfluorenon (z.B. "Epon 1079" der Hexion Specialty Chemicals Inc.).

Weitere bevorzugte kommerziell erhältliche Verbindungen sind z. B. ausgewählt aus Araldite™ 6010, Araldit™ GY-281™, Araldit™ ECN-1273, Araldit™ ECN-1280, Araldit™ MY-720, RD-2 von der Huntsman Int. LLC; DEN™ 432, DEN™ 438, DEN™ 485 von Dow Chemical Co., Epon™ 812, 826, 830, 834, 836, 871, 872,1001, 1031 etc. von Hexion Specialty Chemicals Inc. und HPT™ 1071, HPT™ 1079 ebenfalls von Hexion Specialty Chemicals Inc., als Novolak-Harze weiterhin beispielsweise Epi-Rez™ 5132 von Hexion Specialty Chemicals Inc., ESCN-001 von Sumitomo Chemical, Quatrex 5010 von Dow Chemical Co., RE 305S von Nippon Kayaku, Epiclon™ N673 von DaiNipon Ink Chemistry oder Epicote™ 152 von Hexion Specialty Chemicals Inc.

Weiterhin können die folgenden Polyepoxide zumindest anteilig mit verwendet werden: Polyglycidylester von Polycarbonsäuren, beispielsweise Umsetzungsprodukte von Glycidol oder Epichlorhydrin mit aliphatischen oder aromatischen Polycarbonsäuren wie Oxalsäure, Bernsteinsäure, Glutarsäure, Terephthalsäure oder Dimerfettsäure.

Das Epoxid-Äquivalentgewicht geeigneter Polyepoxide kann zwischen 150 und 50000, vorzugsweise zwischen 170 und 5000, variieren. Beispielsweise ist ein Epoxidharz auf Basis Epichlorhydrin/Bisphenol-A geeignet, das ein Epoxid-Äquivalentgewicht von 475 bis 550 g/eq bzw. einen Epoxidgruppen-Gehalt im Bereich von 1820 bis 2110 mmol/g aufweist. Der nach RPM 108-C bestimmte Erweichungspunkt liegt im Bereich von 75 bis 85°C.

Dabei kann die erfindungsgemäße zweikomponentige Masse mindestens ein Epoxid-Prepolymer a) enthalten, das bei Raumtemperatur (22°C) bei Normaldruck flüssig ist. Dies ist erfindungsgemäß bevorzugt, da es die Formulierung von bei Raumtemperatur flüssigen Komponenten für die zweikomponentige härtbare Masse erleichtert, die bei Raumtemperatur miteinander vermischt werden können. Als bei Raumtemperatur flüssige Epoxid-Prepolymere werden vorzugsweise Reaktionsprodukte von Epichlorhydrin mit Bisphenol A oder Bisphenol F eingesetzt. Typischerweise haben diese Epoxid-Äquivalentgewichte im Bereich von etwa 150 bis etwa 480, beispielsweise 180 bis 195. Ein besonders bevorzugtes Epoxid ist Epon™ 828, ein DGEBA-Harz mit einem Epoxid-Äquivalentgewicht im Bereich von 185 bis 192. Vorzugsweise enthält der Klebstoff ausschließlich Epoxide bzw. Epoxid-Präpolymere, die bei 22 °C unter Normaldruck flüssig sind.

Die zweikomponentige härtbare Masse besteht vor dem Vermischen aus einer Komponente A und einer hiervon getrennten Komponente B, wobei vorzugsweise die Komponente A das Epoxid und die Partikel mit Kern-Schale-Struktur und die Komponente B den bei Raumtemperatur reaktiven Härter für das Epoxid und den aliphatischen Poly(alkylenether), der an jedem Kettenende eine aliphatische Aminogruppe trägt, enthält.

Als bei Raumtemperatur reaktiven Härter für das Epoxid [= Komponente b) der vorliegenden Erfindung] kommen die bekannten Epoxid-Härter in Betracht, beispielsweise eine aminogruppenhaltige Verbindung oder eine thiolgruppenhaltige Verbindung. Hierfür können allgemein diejenigen Amin- oder Thiol-Härter eingesetzt werden, die dem Fachmann als Härterkomponente für zweikomponentige Epoxid-Klebstoffe bekannt sind. Beispielsweise sind hierfür die als "Jeffamine™ D" oder "Jeffamine™ T" bekannten di- oder trifunktionalen aminoterminierten Polyalkylenglykole, insbesondere auf Basis von Ethylenoxid und/oder Propylenoxid geeignet. Weitere Beispiele sind Polyamidoamine (bevorzugt: verschiede Typen Versamid™, Aradur™ oder Ancamide™), Polyamine (bevorzugt: Diethylentriamin, Triethylentetramin, Tetraethylenpentaamin, Pentaethylenhexamin, Aradur™, Ancamin™, Lauromin™), cycloaliphatische Polyamine (bevorzugt: Ancamine™, Lauromine™), Polyaminoimidazolin (bevorzugt: Versamid™), Aralkylamine (bevorzugt: MXDA) sowie aromatische Amine (bevorzugt 4,4'-Diaminodiphenylsulfone, MDA).

Weiterhin sind die folgenden Amine als Härter geeignet: 1-Propanamin, Butylamin, Pentylamin, Hexylamin, Heptylamin, Octylamin, Nonylamin, Decylamin, Dodecylamin, Cyclohexylamin, Aminomethylcyclohexan, N-Aminoethyl-piperidin, 1-Amino-3,5,5-trimethyl-cyclohexan, Benzylamin, Aminophenol, 2-Aminoethanol, 3-Amino-1-propanol, 4-Amino-1-butanol, 5-Amino-1-pentanol, oder weitere Polyamine, insbesondere Diamine wie beispielsweise Tetramethylendiamin, Hexamethylendiamin (HMDA), 2-Methylpentamethylendiamin, Nonamethylendiamin, Undecamethylendiamin, Dodecamethylendiamin, 2,2,4-Trimethylhexamethylendiamin, 2,4,4-Trimethylhexamethylendiamin, 5-Methylnonamethylendiamin, 1,3-Bis(aminomethyl)cyclohexan, 1,4-Bis(aminomethyl)-cyclohexan, 1-Amino-3-aminomethyl-3,5,5-trimethyl-cyclohexan, Bis(4-aminocyclohexyl)methan, Bis(3-methyl-4-aminocyclohexyl)methan, 2,2-Bis(4-aminocyclohexyl)-propan, Triethyleneglycoldiamin, m-Xyloldiamin (m-XDA), p-Xyloldiamin (p-XDA), 1,4-Bis(amino-propyl)piperidin (BAPP), 3,3'-(Oxy bis(2,1-ethandiyloxy))bis(diaminopropyliertes) Diethylenglycol, z.B. ANCAMINE™ 1922A" von Air Products ), 1,3-Diaminocyclohexan, 1,4-Diaminocyclohexan, Di(aminomethyl)cyclohexan, 1-Amino-3-aminomethyl-3,5,5-trimethylcyclohexan ("Isophorondiamin"), Cyclohexylendiamin, 4,4'-Isopropylidendicyclohexyldiamin und 3,3'-Dimethyl-4,4'-isopropylidendicyclohexyldiamin. Mögliche nichtaminische Härter sind beispielsweise Polymercaptane (bevorzugt: Capcure™ 3-800).

Die erfindungsgemäß einzusetzende Komponente d) fällt formal auch unter die vorstehend gegebene Definition eines Härters. Im Rahmen der vorliegenden Erfindung soll die Komponente d) jedoch zusätzlich zu einer hiervon verschiedenen Härterkomponenten b) eingesetzt werden. Dies heißt, dass die Härterkomponente b) nicht der Definition der Komponente d) entspricht.

Im Rahmen der vorliegenden Erfindung hat es sich als besonders vorteilhaft erwiesen, wenn die Härterkomponente b) ausgewählt ist aus speziellen Gruppen von Verbindungen, die bestimmte gemeinsame strukturelle Merkmale aufweisen sowie deren Mischungen.

So wird eine erste Gruppe i) strukturell verwandter Härterkomponenten gebildet aus den linearen di- oder trifunktionalen aminoterminierten Polyalkylenglykolen, auf Basis von Ethylenoxid und/oder Propylenoxid. Erfindungsgemäß sind insbesondere die Härterkomponenten dieser Gruppe besonders bevorzugt, die eine mittlere Molmasse Mw unterhalb von 500g/mol, vorzugsweise unterhalb von 300g/mol aufweisen. Weiterhin sind die aminoterminierten Polyalkylenglykole besonders bevorzugt, die höchstens 6 Ethylenoxid- und/oder Propylenoxideinheiten aufweisen. Weiterhin bevorzugt sind die aminoterminierten Polyalkylenglykole, die Ethylenoxid- und Propylenoxideinheiten aufweisen. Ein ganz besonders bevorzugter Vertreter dieser Gruppe ist das unter der CAS-Nr. 4246-51-9 bekannte 4,7,10-Trioxatridecan-1,13-diamin, das beispielsweise unter der Handelsbezeichnung ANCAMINE™ 1922A" von Air Products vertrieben wird.

Eine zweite Gruppe ii) strukturell miteinander verwandter, erfindungsgemäß bevorzugter Härterkomponenten b) ist die Gruppe der Polyamidoamine sowie deren Derivate. In Rahmen dieser Gruppe haben sich die Polyamidoamine, die unter der CAS-Nr. 68410-23-1 zusammengefasst sind, als besonders vorteilhaft erwiesen. Derartige Polyamidoamine sind im Handel häufig als Mischungen mit weiteren Bestandteilen erhältlich. So sind beispielsweise Mischungen mit Polyaminen, wie beispielsweise N,N-Dimethyl-1,3-diaminopropan (CAS-Nr. 109-55-7), 3,6-Diazaoctan-1,8-diamin (CAS-Nr. 112-24-3), 3,6,9-Triazaundecan-1-11-diamin (CAS-Nr. 112-57-2) und/oder 3-Azapentan-1,5-diamin (CAS-Nr. 111-40-0) erhältlich. Weitere Zusätze sind beispielsweise 2-(2-Butoxyethoxy)ethanol (CAS-Nr. 112-34-5) und/oder Butan-1-ol. Polyamidoaminrohstoffe, die eine Beimischung von 3,6-Diazaoctan-1,8-diamin (CAS-Nr. 112-24-3), 3,6,9-Triazaundecan-1-11-diamin (CAS-Nr. 112-57-2) und/oder N,N-Dimethyl-1,3-diaminopropan (CAS-Nr. 109-55-7) - jeweils alleine oder in Mischung miteinanderenthalten, haben sich als erfindungsgemäß ganz besonders bevorzugt erwiesen.

Eine dritte Gruppe iii) der strukturell miteinander verwandten, erfindungsgemäß bevorzugten Härterkomponenten b) ist die Gruppe der cycloaliphatischen Polyamine. Innerhalb dieser Gruppe sind die Derivate des Cylcohexans besonders bevorzugt. Erfindungsgemäß bevorzugte Vertreter dieser Gruppe sind beispielsweise 1,3-Diaminocyclohexan, 1,4-Diaminocyclohexan, Di(aminomethyl)cyclohexan sowie 1-Amino-3-aminomethyl-3,5,5-trimethylcyclohexan ("Isophorondiamin"). 1-Amino-3-aminomethyl-3,5,5-trimethylcyclohexan ist ein ganz besonders bevorzugter Vertreter dieser Gruppe.

Die Härterkomponente b) ist vorzugsweise ein Amin oder eine Mischung mehrere Amine. Besonders bevorzugt wird eine Mischung aus mindestens zwei, vorzugsweise mindestens drei unterschiedlichen Aminen eingesetzt. Dabei ist es besonders bevorzugt, dass die Amine der Mischung ausgewählt sind aus 3,3'-Oxybis(ethylenoxy)bispropylamin, Polyamidoamin (sowie gegebenenfalls dessen Beimischungen) und Isophorondiamin.

Im Rahmen einer besonders bevorzugten Ausführungsform der Erfindung hat es sich als vorteilhaft erwiesen, wenn die zweikomponentige härtbare Masse mindestens zwei voneinander strukturell verschiedene Härterkomponenten der Gruppen i), ii) und iii) enthält.

Besonders gute Resultate hinsichtlich der Schlagzähigkeit auch bei tiefen Temperaturen können erfindungsgemäß erzielt werden, wenn die zweikomponentigen härtbaren Massen jeweils einen Vertreter der genannten Gruppen i), ii) und iii) enthalten, das heißt, dass sowohl ein lineares di- oder trifunktionales aminoterminiertes Polyalkylenglykol, ein Polyamindoamin sowie ein cycloaliphatisches Polyamin enthalten ist.
Besonders gute Schlagzähigkeiten, insbesondere auch bei -40°C, konnten für eine Härterkombination aus 4,7,10-Trioxatridecan-1,13-diamin, einem Polyamidoamin und/oder seinem Derivat sowie 1-Amino-3-aminomethyl-3,5,5-trimethylcyclohexan nachgewiesen werden.

Dabei hat es sich als besonders vorteilhaft erwiesen, wenn die Härterkomponenten der drei strukturell unterschiedlichen Gruppen in bestimmten Mengenverhältnissen zueinander eingesetzt werden:
- Mengenverhältnis Härter Gruppe i) zu Härter Gruppe ii) : von 3:1 bis 0,5:1, insbesondere von 2:1 bis 1:1;
- Mengenverhältnis Härter Gruppe ii) zu Härter Gruppe iii): 5:1 bis 1:1, insbesondere von 3:1 bis 1:1.

Bei der Komponente c), Partikeln mit Kern-Schale-Struktur, handelt es sich vorzugsweise um Kautschuk-Partikel. Diese tragen dazu bei, die Schlagzähigkeit der ausgehärteten Masse zu verbessern, insbesondere bei Temperaturen unterhalb von 0°C. Dabei ist es bevorzugt, dass die Kautschuk-Partikel mit Kern-Schale-Struktur einen Kern aus einem Polymermaterial mit einer Glasübergangstemperatur von unterhalb 0 °C und eine Hülle aus einem Polymermaterial mit einer Glasübergangstemperatur von oberhalb 25 °C aufweisen. Besonders geeignete Kautschuk-Partikel mit Kern-Schale-Struktur können einen Kern aus einem Dien-Homopolymer, einem Dien-Copolymer oder einem Polysiloxan-Elastomer und/oder eine Schale aus einem Alkyl(meth)acrylat-Homopolymer oder -Copolymer aufweisen.
Beispielsweise kann der Kern dieser Kern-Schale-Partikel ein Dienhomopolymer oder Copolymer enthalten, das ausgewählt sein kann aus einem Homopolymer von Butadien oder Isopren, einem Copolymer von Butadien oder Isopren mit einem oder mehreren ethylenisch ungesättigten Monomeren, wie beispielsweise vinylaromatische Monomere, (Meth)acrylnitril, (Meth)acrylaten oder ähnlichen Monomeren. Das Polymer oder Copolymer der Schale kann als Monomere beispielsweise enthalten: (Meth)acrylate, wie insbesondere Methylmethacrylat, vinylaromatische Monomere (beispielsweise Styrol), Vinylcyanide (beispielsweise Acrylnitril), ungesättigte Säuren oder Anhydride (beispielsweise Acrylsäure), (Meth)acrylamide und ähnliche Monomere, die zu Polymeren mit einer geeigneten hohen Glastemperatur führen.

Das Polymer oder Copolymer der Schale kann Säuregruppen aufweisen, die durch Metallcarboxylat-Bildung vernetzen können, beispielsweise durch Salzbildung mit zweiwertigen Metallkationen. Weiterhin kann das Polymer oder Copolymer der Schale covalent vernetzt sein, indem man Monomere einsetzt, die zwei oder mehr Doppelbindungen pro Molekül aufweisen.

Als Kern können auch andere kautschukartige Polymere verwendet werden, wie beispielsweise Polybutylacrylat oder Polysiloxanelastomere, wie beispielsweise Polydimethylsiloxan, insbesondere vernetztes Polydimethylsiloxan.

Typischerweise sind diese Kern-Schale-Partikel so aufgebaut, dass der Kern 50 bis 95 Gew.-% des Kern-Schale-Partikels und die Schale 5 bis 50 Gew.-% dieses Partikels ausmachen.

Vorzugsweise sind diese Kautschukpartikel relativ klein. Beispielsweise kann die durchschnittliche Teilchengröße (wie beispielsweise durch Lichtstreumethoden bestimmbar) im Bereich von etwa 0,03 bis etwa 2 µm, insbesondere im Bereich von etwa 0,05 bis etwa 1 µm liegen. Kleinere Kern-Schale-Partikel können jedoch ebenfalls verwendet werden, beispielsweise solche, deren mittlerer Durchmesser kleiner als etwa 500 nm, insbesondere kleiner als etwa 200 nm ist. Beispielsweise kann die durchschnittliche Teilchengröße im Bereich von etwa 25 bis etwa 200 nm liegen. Zur Herstellung der erfindungsgemäßen Masse werden die Kern-Schale-Partikel vorzugsweise als Suspension in einem bei 22 °C flüssigen Epoxid eingesetzt. Hiefür kann beispielsweise eine Suspension verwendet werden, die 30 - 35 Gew.-% Kern-Schale-Partikel in einem bei 22 °C flüssigen DGEBA-Harz mit einem Epoxid-Äquivalentgewicht im Bereich von 185 bis 192 enthält.

Die Herstellung derartiger Kern-Schale-Partikel ist im Stand der Technik bekannt, wie beispielsweise in WO 2007/025007 auf Seite 6, Zeilen 16 bis 21 angegeben ist. Kommerzielle Bezugsquellen derartiger Kern-Schale-Partikel werden in diesem Dokument im letzten Absatz der Seite 6 bis zum ersten Absatz der Seite 7 aufgeführt. Auf diese Bezugsquellen wird hiermit verwiesen. Weiterhin wird auf Herstellverfahren für solche Partikel verwiesen, die in dem genannten Dokument von Seite 7, 2. Absatz bis Seite 8, 1. Absatz beschrieben sind. Für nähere Informationen zu geeigneten Kern-Schale-Partikel wird ebenfalls auf das genannte Dokument WO 2007/025007 verwiesen, das von Seite 8, Zeilen 15 bis Seite 13, Zeile 15 ausführliche Informationen hierzu enthält.

Die vorliegende Erfindung beruht auf der Beobachtung, dass unter den vielen in WO 2009/051699 und in WO 2007/025007 genannten "Toughener" auf Basis Aminsubstituierter Polyakylenglykole nur solche die vorliegende Aufgabe lösen, die bestimmte Bedingungen an Aufbau und Molmasse erfüllen. Amin-substituierte Polyether entfalten dann die erwünschte Wirkung, wenn die Polyether-Kette vollständig oder zu mindestens 50 Mol-% aus Polytetrahydrofuran (= Polytetramethylenoxid) besteht und die Aminogruppen aliphatisch sind. Dabei kann die Polyetherkette linear oder verzweigt sein. Die gewichtsmittlere Molmasse Mw (wie weiter oben definiert) muss mindestens 1800 betragen. Die obere Grenze der Molmasse ist weniger kritisch und kann beispielsweise bei 6000 liegen.

Die erfindungsgemäße zweikomponentige Masse kann zusätzlich mindestens ein Treibmittel enthalten, vorzugsweise in einer Menge, bezogen auf die gesamte zweikomponentige Masse, von etwa 0,1 bis etwa 10 Gew.-%, insbesondere von etwa 0,5 bis etwa 5 Gew.-%.

Als Treibmittel eignen sich im Prinzip alle bekannten Treibmittel wie z. B. die "chemischen Treibmittel", die durch Zersetzung Gase freisetzen, oder "physikalische Treibmittel", d.h. expandierende Hohlkugeln. Beispiele für die erstgenannten Treibmittel sind Azobisisobutyronitril, Azodicarbonamid, Di-Nitrosopentamethylentetramin, 4,4'-Oxybis-(benzolsulfonsäurehydrazid), Diphenylsulfon-3,3'-disulfohydrazid, Benzol-1,3-disulfohydrazid, p-Toluolsulfonylsemicarbazid. Besonders bevorzugt werden die expandierbaren Kunststoffmikrohohlkugeln auf der Basis von Polyvinylidenchloridcopolymeren oder Acrylnitril/(Meth)acrylat-Copolymeren. Diese sind z.B. unter dem Namen "Dualite®" bzw. "Expancel®" von den Firmen Pierce & Stevens bzw. Casco Nobel im Handel erhältlich. Zur Aktivierung müssen die Treibmittel auf eine Temperatur deutlich oberhalb von Raumtemperatur erwärmt werden, beispielsweise auf mindestens 60 °C oder mindestens 80 °C. Bei der erfindungsgemäßen zweikomponentigen Masse erfolgt dieses Erwärmen nach dem Vermischen der beiden Komponenten von selbst aufgrund der Reaktionswärme der exothermen Härtungsreaktion. Eine Wärmezufuhr von außen ist nicht erforderlich.

Die Menge an Treibmittel hängt von dem beabsichtigten Grad des Aufschäumens ab. Bei der Verwendung als Strukturschaum zum Verstärken und/oder Versteifen von Hohlraumstrukturen, beispielsweise im Fahrzeugbau, strebt man in der Regel eine irreversible Volumenvergrößerung von etwa 10 bis etwa 300 % an. Die erforderliche Treibmittelmenge liegt dann in der Regel im Bereich von etwa 0,5 bis etwa 10 Gew.-%, vorzugsweise von etwa 1 Gew.-% bis etwa 5 Gew.-%.

Unter einer "irreversiblen Volumenvergrößerung" ist zu verstehen, dass die Masse zusätzlich zur normalen und reversiblen thermischen Ausdehnung gemäß ihrem thermischen Ausdehnungskoeffizienten ihr Volumen im Vergleich zum Ausgangsvolumen bei Raumtemperatur (22 °C) beim Aufschäumen und Aushärten irreversibel derart vergrößert, dass es nach dem Wiederabkühlen auf Raumtemperatur um den genannten Prozentsatz größer ist als zuvor. Der angegebene Expansionsgrad bezieht sich also auf das Volumen der Masse bei Raumtemperatur vor und nach dem Aufschäumen und Aushärten.

In der Regel enthalten die erfindungsgemäßen Massen weiterhin an sich bekannte Füllstoffe wie zum Beispiel die diversen gemahlenen oder gefällten Kreiden, Ruß, Calcium-Magnesiumcarbonate, Talkum, Schwerspat sowie insbesondere silicatische Füllstoffe vom Typ des Aluminium-Magnesium-Calcium-Silicats, z. B. Wollastonit, Chlorit. Vorzugsweise können Glimmer-haltige Füllstoffe mit verwendet werden, ganz besonders bevorzugt ist hier ein so genannter 2- Komponentenfüllstoff aus Muskovit-Glimmer und Quarz.

Zur Gewichtsreduzierung kann die Masse zusätzlich zu den oder anstelle der vorgenannten "normalen" Füllstoffen sogenannte Leichtfüllstoffe enthalten. Diese können beispielsweise ausgewählt werden aus der Gruppe der Metallhohlkugeln wie z. B. Stahlhohlkugeln, Glashohlkugeln, Flugasche (Fillite), Kunststoffhohlkugeln auf der Basis von Phenolharzen, Epoxidharzen oder Polyestern, expandierte Microhohlkugeln mit Wandmaterial aus (Meth)acrylsäureester-Copolymeren, Polystyrol, Styrol(meth)acrylat-Copolymeren sowie insbesondere aus Polyvinylidenchlorid sowie Copolymeren des Vinylidenchlorids mit Acrylnitril und/oder (Meth)acrylsäureestern, keramische Hohlkugeln oder organische Leichtfüllstoffe natürlichen Ursprungs wie gemahlene Nussschalen, beispielsweise die Schalen von Cashewnüssen, Kokosnüssen oder Erdnussschalen sowie Korkmehl oder Kokspulver. Besonders bevorzugt werden dabei solche Leichtfüllstoffe auf der Basis von Mikrohohlkugeln, die in der ausgehärteten Masse eine hohe Druckfestigkeit gewährleisten. Der Massenanteil der Leichtfüllstoffe an der gesamten zweikomponentigen Masse beträgt vorzugsweise etwa 1 bis etwa 10, insbesondere etwa 2 bis etwa 8 Gew.-%. Insbesondere sind Glashohlkugeln geeignet.

In einer besonders bevorzugten Ausführungsform enthalten die thermisch härtbaren Massen zusätzlich Fasern, beispielsweise auf der Basis von Aramidfasern, Kohlenstoff-Fasern, Metallfasern - z.B. aus Aluminium-, Glasfasern, Polyamidfasern, Polyethylenfasern oder Polyesterfasern, wobei diese Fasern vorzugsweise Pulpfasern oder Stapelfasern sind, die eine Faserlänge zwischen 0,5 und 6 mm haben und einen Durchmesser von 5 bis 20 µm. Besonders bevorzugt sind hierbei Polyamidfasern vom Typ der Aramidfaser oder auch Polyesterfasern.

Weiterhin können die erfindungsgemäßen härtbaren Massen gängige weitere Hilfs- und Zusatzmittel wie z. B. Weichmacher, Rheologie-Hilfsmittel, Netzmittel, Haftvermittler, Alterungsschutzmittel, Stabilisatoren und/oder Farbpigmente enthalten. Je nach Anforderungsprofil in Bezug auf Verarbeitungseigenschaften, die Flexibilität, die geforderte Versteifungswirkung sowie der klebende Verbund zu den Substraten können die Mengenverhältnisse der Einzelkomponenten in verhältnismäßig weiten Grenzen variieren.

Gegebenenfalls können die erfindungsgemäßen Massen Reaktivverdünner zum Einstellen des Fließverhaltens enthalten. Reaktive Verdünner im Sinne dieser Erfindung sind Epoxigruppen enthaltende, niederviskose Substanzen (Glycidylether oder Glycidylester) mit aliphatischer oder aromatischer Struktur. Typische Beispiele für Reaktivverdünner sind Mono-, Di- oder Triglycidylether von C₆- bis C₁₄-Monoalkoholen oder Alkylphenolen sowie die Monoglycidylether des Cashewnuss-Schalenöls, Diglycidylether des Ethylenglycols, Diethylenglycols, Triethylenglycols, Tetraethylenglycols, Propylenglycols, Dipropylenglycols, Tripropylenglycols, Tetrapropylenglycols, 1,4-Butylenglycols, 1,5-Pentandiols, 1,6-Hexandiols, Cyclohexandimethanols, Triglycidylether des Trimethylolpropans sowie die Glycidylester von C₆- bis C₂₄- Carbonsäuren oder deren Mischungen.

Für die bevorzugten Mengenbereiche der einzelnen Komponente in der erfindungsgemäßen zweikomponentigen härtbaren Masse gelten jeweils unabhängig voneinander die nachfolgenden Werte. Dabei ist es besonders bevorzugt, dass alle Komponenten in den genannten Mengenbereichen vorliegen. Mengenangaben in Gewichtsprozent beziehen sich im Rahmen dieser Offenbarung stets auf die gesamte, einsatzfertige Masse nach Vermischen der beiden Komponenten und sind in ihrer Kombination so zu wählen, dass die gesamte Masse nach dem Vermischen 100 Gew.-% ausmacht. Die bevorzugten Mengenbereiche sind:
a) mindestens ein Epoxid: 20 - 70 Gew.-%, vorzugsweise 30 bis 50 Gew.-%,
b) mindestens ein bei Raumtemperatur reaktiven Härter für das Epoxid: 5 bis 25 Gew.-%, vorzugsweise 8 bis 18 Gew.-%,
c) Partikel mit Kern-Schale-Struktur: 5 - 25 Gew.-%, vorzugsweise 10 - 15 Gew.-%,
d) mindestens ein aliphatischer Poly(alkylenether), der an jedem Kettenende eine Aminogruppe trägt: 3 - 30 Gew.-%, vorzugsweise 5 bis 20 Gew.-%,
e) möglicher Rest zu 100 Gew.-%: weitere Additive (wie beispielsweise Füllstoffe und/oder Leichtfüllstoffe) oder Wirkstoffe, darunter, bezogen auf die gesamte zweikomponentige Masse, 0,5 bis 10 Gew.-%, vorzugsweise 1 bis 5 Gew.-% Treibmittel, falls ein Aufschäumen gewünscht wird.

Die zweikomponentige härtbare Masse liegt in ihrer Lager- und Versandform in zwei Komponenten vor, die unmittelbar vor der Applikation miteinander vermischt werden. Dabei ist es bevorzugt, dass die Masse vor dem Vermischen aus einer Komponente A und einer hiervon getrennten Komponente B besteht, wobei die Komponente A das Epoxid und vorzugsweise Partikel mit Kern-Schale-Struktur und die Komponente B den bei Raumtemperatur reaktiven Härter für das Epoxid und den aliphatischen Poly(alkylen-ether), der an jedem Kettenende eine Aminogruppe trägt, enthält. Partikel mit Kern-Schale-Struktur können auch in der Komponente B vorliegen. Verwendet man zusätzlich ein Treibmittel, setzt man dies vorzugsweise der Komponente A zu. Das Einarbeiten in die Komponente B ist jedoch auch möglich.

Eine bevorzugte Verwendung der erfindungsgemäßen Masse als Klebstoff liegt in der Reparatur von Kraftfahrzeugen. Daher betrifft ein weiterer Aspekt der vorliegenden Erfindung die Verwendung der erfindungsgemäßen zweikomponentigen härtbaren Masse zur Verklebung von Fügeteilen bei der Kraftfahrzeugreparatur, wobei man den vermischten Klebstoff nach dem Zusammenfügen der Teile bei einer Temperatur im Bereich der Umgebungstemperatur, insbesondere im Bereich von etwa 10 bis etwa 30°C aushärten lässt. Wie weiter oben beschrieben, erwärmt sich die Masse nach dem Vermischen aufgrund der exothermen Härtungsreaktion von selbst und wird daher wärmer als die genannte Umgebungstemperatur. Mit einem "Aushärten bei Umgebungstemperatur" ist also gemeint, dass man keine zusätzliche Wärme zuführen muss.

Weiterhin kann die erfindungsgemäße Masse, sofern sie mindestens ein Treibmittel enthält, als Strukturschaum zum Verstärken und/oder Aussteifen von Hohlraumstrukturen dienen, insbesondere im Fahrzeugbau. Beispielsweise finden sich solche Hohlräume, die häufig durch Einbringen von Strukturschäumen verstärkt und/oder ausgesteift werden, im Bereich der Schweller, der Säulen oder der Dachträger.

Die erfindungsgemäßen Massen weisen nach dem Aushärten auch bei sehr tiefen Temperaturen (bis zu -40°C) eine sehr hohe Schlagzähigkeit auf, so dass die Anforderungen an die Unfallsicherheit von Fahrzeugen auch bei tiefen Temperaturen erfüllt werden.

Ausführungs- und Vergleichsbeispiele:
Aus den Rohstoffen gemäß nachfolgender Tabelle wurden die Komponenten A und B erfindungsgemäßer Klebstoffe und Vergleichsprodukte hergestellt. Dabei enthielt die Komponente A das Epoxid, die Kern-Schale-Partikel und die Glashohlkugeln, die Komponente B Diaminhärter und die "Toughener".

Zur Herstellung von Klebstoff-Formulierungen wurden zunächst die Einzelkomponenten A und B getrennt von einander hergestellt. Hierzu wurden die Einzelbestandteile der jeweiligen Komponente unter Vakuum vermischt. Anschließend wurden die Komponenten A und B miteinander vermischt und diese Mischung unverzüglich auf die vorbereiteten Prüfkörper aufgetragen. Anschließend wurde durch Aufstreuen von wenigen Glaskugeln eine Klebschichtdicke von 250 µm eingestellt und die Prüfkörper in der geometrischen Anordnung wie in DIN ISO 11343 angegeben gefügt. Die Prüfkörper wurden mit Metallklammen fixiert und der Klebstoff bei Raumtemperatur für mindestens 48h ausgehärtet.

Zum Test der Schlagschälfestigkeit bei verschiedenen Temperaturen wurde Prüfkörper verwendet, wie sie in der Deutschen Norm DIN ISO 11343 beschrieben werden. Vor der Verklebung wurden die Klebeflächen mit Schmelzkammerschlacke 0,1 - 0,5 mm gestrahlt und anschießend mit einem organischen Kohlenwasserstoff-Reiniger (z.B. Teroson Cleaner FL) von restlichen Ölverschmutzungen befreit.

Für die Bestimmung der Schlagschälfestigkeit wurde ein RKP 450 Schlagpendel der Firma Zwick Roell verwendet, wobei der Test mit einer Aufprallgeschwindigkeit des Keiles von 2 m/s durchgeführt wurde. Die Schlagschälfestigkeit wurde bei Raumtemperatur, -30°C und -40°C gemessen. Für die beiden tiefen Temperaturen wurden die Prüfkörper mindestens eine Stunde bei -25°C bis -30°C konditioniert und anschließend in der Klimakammer des Messgerätes auf die angegebene Temperatur endgekühlt und vermessen. Aus dem aufgenommenen Kraft-Zeit-Diagramm wurde nach Umrechnung auf den zurückgelegten Weg des Keiles und anschließender Integration die geleistete Schlagschälarbeit in Joule bestimmt und in der nachfolgenden Tabelle als "Schlagzähigkeit" angegeben.

Die Mengenangaben der nachfolgenden Tabelle verstehen sich in [g]. Molmassenangaben bedeuten die gewichtsmittleren Molmassen Mw, bestimmbar durch GPC mit Polyethylenglycol-Standard, und sind als relative Molmassen-Mittelwerte in Polyethylenglycol-Moläquivalenten in g/mol = Dalton angegeben. Die Bereiche geben die Varianz der Molmassenbestimmung an.

| **Beispiel 1** | **Beispiel 2** | **Beispiel 3** | **Beispiel 4** | **Beispiel 5** | |
|---|---|---|---|---|---|
| 13,2 | 13,2 | 13,2 | 13,2 | 13,2 | Partikel mit Kern-Schale-Struktur |
| 51,8 | 51,8 | 51,8 | 51,8 | 51,8 | DGEBA-Harz |
| 2 | 4 | 6 | 4 | 4 | Glashohlkugeln |
| | | | | | |
| 8,4 | 8,4 | 8,4 | -- | -- | Poly-THF Mw 2600 +/- 100, verzweigt, aliphatische Amine |
| -- | -- | -- | -- | -- | PPG Mw1800 +/- 50, linear, aliphatische Amine |
| -- | -- | -- | -- | -- | PPG Mw 2550 +/- 50, verzweigt, aliphatische Amine |
| -- | -- | -- | -- | -- | PPG Mw 5000 +/-100, verzweigt, aliphatische Amine |
| -- | -- | -- | -- | -- | Poly-THF Mw 2100 +/- 50, linear, aromatische Amine |
| -- | -- | -- | -- | -- | Poly-THF/PPG Copolymer Mw 1350 +/- 50, linear, aliphatische Amine |
| -- | -- | -- | 8,4 | -- | Poly-THF/PPG Copolymer Mw 2000 +/- 50, linear, aliphatische Amine |
| -- | -- | -- | -- | 8,4 | Poly-THF Mw 3050 +/- 50, linear, aliphatische Amine |
| -- | -- | -- | -- | -- | PPG Mw ca 400, verzweigt, aliphatische Amine |
| -- | -- | -- | -- | -- | Poly-THF Mw 300 +/- 20, verzweigt, aliphatische Amine |
| | | | | | |
| 7,5 | 7,5 | 7,5 | 7,5 | 7,5 | 3,3'-Oxybis(ethylenoxy)bis)propylamin (CAS 4246-51-9) |
| 5,6 | 5,6 | 5,6 | 5,6 | 5,6 | Polyamidoamin |
| 2,8 | 2,8 | 2,8 | 2,8 | 2,8 | Isophorondiamin (CAS 2855-13-2) |
| | | | | | |
| 14,71 | 10,6 | 13,34 | 11,29 | 15,87 | Schlagzähigkeit bei T = 20 °C in [J] |
| 6,10 | 8,20 | 6,70 | 7,47 | 9,87 | Schlagzähigkeit bei T = -30 °C in [J] |
| 6,8 | 7,1 | 5,20 | 5,09 | 9,72 | Schlagzähigkeit bei T = -40 °C in [J] |

| **Vergleich 1** | **Vergleich 2** | **Vergleich 3** | **Vergleich 4** | **Vergleich 5** | **Vergleich 6** | |
|---|---|---|---|---|---|---|
| 13,2 | 13,2 | 13,2 | 13,2 | 13,2 | 13,2 | Partikel mit Kern-Schale-Struktur |
| 51,8 | 51,8 | 51,8 | 51,8 | 51,8 | 51,8 | DGEBA-Harz |
| 2 | 4 | 6 | 4 | 4 | 4 | Glashohlkugeln |
| | | | | | | |
| -- | -- | -- | -- | -- | -- | Poly-THF Mw 2600 +/- 100, verzweigt, aliphatische Amine |
| 8,4 | 8,4 | 8,4 | -- | -- | -- | PPG Mw1800 +/- 50, linear, aliphatische Amine |
| -- | -- | -- | 8,4 | -- | -- | PPG Mw 2550 +/- 50, verzweigt, aliphatische Amine |
| -- | -- | -- | -- | 8,4 | -- | PPG Mw 5000 +/-100, verzweigt, aliphatische Amine |
| -- | -- | -- | -- | -- | 8,4 | Poly-THF Mw 2100 +/- 50, linear, aromatische Amine |
| -- | -- | -- | -- | -- | -- | Poly-THF/PPG Copolymer Mw 1350 +/- 50, linear, aliphatische Amine |
| -- | -- | -- | -- | -- | -- | Poly-THF/PPG Copolymer Mw 2000 +/- 50, linear, aliphatische Amine |
| -- | -- | -- | -- | -- | -- | Poly-THF Mw 3050 +/- 50, linear, aliphatische Amine |
| -- | -- | -- | -- | -- | -- | PPG Mw ca 400, verzweigt, aliphatische Amine |
| -- | -- | -- | -- | -- | -- | Poly-THF Mw 300 +/- 20, verzweigt, aliphatische Amine |
| | | | | | | |
| 7,5 | 7,5 | 7,5 | 7,5 | 7,5 | 7,5 | 3,3'-Oxybis(ethylenoxy)bis)propylamin (CAS 4246-51-9) |
| 5,6 | 5,6 | 5,6 | 5,6 | 5,6 | 5,6 | Polyamidoamin |
| 2,8 | 2,8 | 2,8 | 2,8 | 2,8 | 2,8 | Isophorondiamin (CAS 2855-13-2) |
| | | | | | | |
| 8,42 | 8,34 | 9,41 | 9,47 | 2,81 | 8,94 | Schlagzähigkeit bei T = 20 °C in [J] |
| < 1 | < 1 | < 1 | < 1 | < 1 | < 1 | Schlagzähigkeit bei T = -30 °C in [J] |
| < 1 | < 1 | < 1 | < 1 | < 1 | < 1 | Schlagzähigkeit bei T = -40 °C in [J] |

| **Vergleich 7** | **Vergleich 8** | **Vergleich 9** | **Vergleich 10** | **Vergleich 11** | **Vergleich 12** | |
|---|---|---|---|---|---|---|
| 13,2 | 13,2 | 13,2 | 13,2 | | | Partikel mit Kern-Schale-Struktur |
| 51,8 | 51,8 | 51,8 | 51,8 | 51,6 | 51,6 | DGEBA-Harz |
| 4 | 4 | 4 | 4 | 4 | 4 | Glashohlkugeln |
| | | | | | | |
| -- | -- | -- | -- | -- | 8,4 | Poly-THF Mw 2600 +/- 100, verzweigt, aliphatische Amine |
| -- | -- | -- | -- | -- | -- | PPG Mw1800 +/- 50, linear, aliphatische Amine |
| -- | -- | -- | -- | -- | -- | PPG Mw 2550 +/- 50, verzweigt, aliphatische Amine |
| -- | -- | -- | -- | -- | -- | PPG Mw 5000 +/-100, verzweigt, aliphatische Amine |
| | -- | -- | -- | -- | -- | Poly-THF Mw 2100 +/- 50, linear, aromatische Amine |
| 8,4 | -- | -- | -- | -- | -- | Poly-THF/PPG Copolymer Mw 1350 +/- 50, linear, aliphatische Amine |
| -- | -- | -- | -- | | -- | Poly-THF/PPG Copolymer Mw 2000 +/- 50, linear, aliphatische Amine |
| -- | -- | -- | -- | 8,4 | -- | Poly-THF Mw 3050 +/- 50, linear, aliphatische Amine |
| -- | 8,4 | -- | -- | -- | -- | PPG Mw ca 400, verzweigt, aliphatische Amine |
| -- | -- | 8,4 | -- | -- | -- | Poly-THF Mw 300 +/- 20, verzweigt, aliphatische Amine |
| | | | | | | |
| 7,5 | 7,5 | 7,5 | 7,5 | 7,5 | 7,5 | 3,3'-Oxybis(ethylenoxy)bis)propylamin (CAS 4246-51-9) |
| 5,6 | 5,6 | 5,6 | 5,6 | 5,6 | 5,6 | Polyamidoamin |
| 2,8 | 2,8 | 2,8 | 2,8 | 2,8 | 2,8 | Isophorondiamin (CAS 2855-13-2) |
| | | | | | | |
| 7,13 | 1,59 | 6,83 | < 1 | < 1 | < 1 | Schlagzähigkeit bei T = 20 °C in [J] |
| < 1 | < 1 | < 1 | < 1 | < 1 | < 1 | Schlagzähigkeit bei T = -30 °C in [J] |
| 1,42 | < 1 | < 1 | < 1 | < 1 | < 1 | Schlagzähigkeit bei T = -40 °C in [J] |

## Patentansprüche

1. Zweikomponentige härtbare Masse, enthaltend nach Mischen der beiden Komponenten:
a) mindestens ein Epoxid,
b) mindestens einen bei Raumtemperatur reaktiven Härter für das Epoxid,
c) Partikel mit Kern-Schale-Struktur,
d) mindestens einen aliphatischen Polyalkylenether, der an jedem Kettenende eine Aminogruppe trägt,
**dadurch gekennzeichnet, dass** die Komponente d) von der Komponente b) verschieden ist und ausgewählt ist aus Homo- oder Copolymeren von Tetrahydrofuran, die aliphatische Amino-Endgruppen tragen und die eine gewichtsmittlere Molmasse Mw von mindestens 1800, bestimmt mittels GPC und bezogen auf Polyethylenglycol-Standard, aufweisen.

2. Zweikomponentige härtbare Masse nach Anspruch 1, **dadurch gekennzeichnet, dass** mindestens ein Epoxid a) bei 22 °C und Normaldruck flüssig ist.

3. Zweikomponentige härtbare Masse nach einem der Ansprüche 1 oder 2, **dadurch gekennzeichnet, dass** die Komponente b) ausgewählt ist aus
i) linearen di- oder trifunktionalen aminoterminierten Polyalkylenglykolen, auf Basis von Ethylenoxid und/oder Propylenoxid,
ii) Polyamidoaminen sowie deren Derivaten und
iii) cycloaliphatischen Polyaminen
sowie deren Mischungen.

4. Zweikomponentige härtbare Masse nach einem der Ansprüche 1 bis 3, **dadurch gekennzeichnet, dass** als Komponente b) eine Mischung aus mindestens zwei, vorzugsweise mindestens drei unterschiedlichen Aminen eingesetzt wird.

5. Zweikomponentige härtbare Masse nach Anspruch 4, **dadurch gekennzeichnet, dass** die Amine der Mischung ausgewählt sind aus 3,3'-Oxybis(ethylenoxy)bispropylamin, Polyamidoamin und Isophorondiamin.

6. Zweikomponentige härtbare Masse nach einem oder mehreren der Ansprüche 1 bis 5, **dadurch gekennzeichnet, dass** die Partikel mit Kern-Schale-Struktur c) Kautschuk-Partikel mit Kern-Schale Struktur darstellen, die einen Kautschuk-artigen Kern und eine Hülle aus organischen Polymeren aufweisen.

7. Zweikomponentige härtbare Masse nach Anspruch 6, **dadurch gekennzeichnet, dass** die Kautschuk-Partikel mit Kern-Schale-Struktur einen Kern aus einem Polymermaterial mit einer Glasübergangstemperatur von unterhalb 0 °C und eine Hülle aus einem Polymermaterial mit einer Glasübergangstemperatur von oberhalb 25 °C aufweisen.

8. Zweikomponentige härtbare Masse nach einem oder mehreren der Ansprüche 1 bis 7 **dadurch gekennzeichnet, dass** sie zusätzlich mindestens ein Treibmittel enthält, vorzugsweise mit einem Mengenanteil, bezogen auf die gesamte zweikomponentige Masse, von 0,1 bis 10 Gew.-%, vorzugsweise 0,5 bis 5 Gew.-%.

9. Zweikomponentige härtbare Masse nach einem oder mehreren der Ansprüche 1 bis 8 **dadurch gekennzeichnet, dass** sie die einzelnen Komponenten in folgenden Massenanteilsbereichen in Gew.-% bezogen auf die Gesamtmasse der vermischten Zweikomponentigen härtbaren Masse enthält:
a) mindestens ein Epoxid:20 - 70 %, vorzugsweise 30 bis 50 %
b) mindestens einen bei Raumtemperatur reaktiven Härter für das Epoxid: 5 bis 25 %, vorzugsweise 8 bis 18 %
c) Partikel mit Kern-Schale-Struktur: 5 - 25 %, vorzugsweise 10 - 15 %
d) mindestens einen aliphatischen Poly(alkylenether), der an jedem Kettenende eine aliphatische Aminogruppe trägt: 3 - 30 %, vorzugsweise 5 bis 20 %
e) gegebenenfalls weitere Additive oder Wirkstoffe, darunter, bezogen auf die gesamte zweikomponentige Masse, 0,5 bis 10 Gew.-%, vorzugsweise 1 bis 5 Gew.-% Treibmittel,
wobei sich die Anteile der einzelnen Komponenten zu 100 % addieren und ein.

10. Zweikomponentige härtbare Masse nach einem oder mehreren der Ansprüche 1 bis 9, **dadurch gekennzeichnet, dass** sie vor dem Vermischen aus einer Komponente A und einer hiervon getrennten Komponente B besteht, wobei die Komponente A das Epoxid und die Partikel mit Kern-Schale-Struktur und die Komponente B den bei Raumtemperatur reaktiven Härter für das Epoxid und den aliphatischen Poly(alkylenether), der an jedem Kettenende eine aliphatische Aminogruppe trägt, enthält.

11. Verwendung einer zweikomponentigen härtbaren Masse nach einem oder mehreren der Ansprüche 1 bis 10 zur Verklebung von Fügeteilen bei der Kraftfahrzeugreparatur.

12. Verwendung nach Anspruch 11, wobei man den vermischten Klebstoff bei einer Umgebungstemperatur im Bereich von 10 bis 30 °C aushärten lässt.

13. Verwendung einer zweikomponentigen härtbaren Masse nach einem oder mehreren der Ansprüche 8 bis 10, die mindestens ein Treibmittel enthält, als Strukturschaum zum Verstärken oder Aussteifen von Hohlraumstrukturen, insbesondere im Fahrzeugbau.

## Claims

1. A two-component curable compound, containing, after the two components have been mixed:
a) at least one epoxy,
b) at least one curing agent for the epoxy that is reactive at room temperature,
c) particles having a core-shell structure,
d) at least one aliphatic polyalkylene ether, which carries an amino group on each chain end,
**characterized in that** component d) is different from component b) and is selected from homo- or copolymers of tetrahydrofuran which carry aliphatic amino end groups and which have a weight-average molar mass Mw of at least 1800, determined by GPC and based on the polyethylene glycol standard.

2. The two-component curable compound according to claim 1, **characterized in that** at least one epoxide a) is liquid at 22°C and normal pressure.

3. The two-component curable compound according to one of claims 1 or 2, **characterized in that** component b) is selected from
i) linear di- or trifunctional amino-terminated polyalkylene glycols based on ethylene oxide and/or propylene oxide,
ii) polyamidoamines and the derivates thereof and
iii) cycloaliphatic polyamines
and mixtures thereof.

4. The two-component curable compound according to one of claims 1 to 3, **characterized in that** a mixture of at least two, preferably at least three different amines is used as component b).

5. The two-component curable compound according to claim 4, **characterized in that** the amines of the mixture are selected from 3,3'-oxybis(ethyleneoxy)bispropylemine, polyamidoamine and isophorone diamine.

6. The two-component curable compound according to one or more of claims 1 to 5, **characterized in that** the particles having the core-shell structure c) are rubber particles having a core-shell structure, which rubber particles have a rubber-like core and a shell made of organic polymers.

7. The two-component curable compound according to claim 6, **characterized in that** the rubber particles having the core-shell structure have a core made of a polymer material that has a glass transition temperature of below 0°C and a shell made of a polymer material that has a glass transition temperature of above 25°C.

8. The two-component curable compound according to one or more of claims 1 to 7, **characterized in that** it additionally contains at least one propellant, preferably having a quantity, based on the entire two-component compound, of from 0.1 to 10 wt.%, preferably from 0.5 to 5 wt.%.

9. The two-component curable compound according to one or more of claims 1 to 8, **characterized in that** it contains the individual components in the following mass percentage ranges in wt.% based on the total weight of the mixed two-component curable compound:
a) at least one epoxy: 20-70%, preferably 30 to 50%
b) at least one curing agent for the epoxy that is reactive at room temperature: 5 to 25%, preferably 8 to 18%
c) particles having a core-shell structure: 5-25%, preferably 10-15%
d) at least one aliphatic poly(alkylene ether), which carries an amino group on each chain end: 3-30%, preferably 5 to 20%
e) optionally, additional additives or active ingredients, including, based on the entire two-component compound, 0.5 to 10 wt.%, preferably 1 to 5 wt.% propellant,
the proportions of the individual components adding up to 100% and one.

10. The two-component curable compound according to one or more of claims 1 to 9, **characterized in that** it consists, before being mixed, of a component A and a component B that is separate therefrom, component A containing the epoxy and the particles having the core-shell structure and component B containing the curing agent for the epoxy that is reactive at room temperature and the aliphatic poly(alkylene ether), which carries an aliphatic amino group at each chain end.

11. The use of a two-component curable compound according to one or more of claims 1 to 10 for adhesively bonding joined parts when repairing motor vehicles.

12. The use according to claim 11, wherein the mixed adhesive can be cured at an ambient temperature in the range of from 10 to 30°C.

13. The use of a two-component curable compound according to one or more of claims 8 to 10, which contains at least one propellant, as a structural foam for strengthening or stiffening hollow structures, in particular in vehicle construction.

## Revendications

1. Masse durcissable à deux composants contenant après le mélange des deux composants :
a) au moins un époxyde,
b) au moins un solidifiant réactif à température ambiante pour l'époxyde,
c) des particules dotées d'une structure noyau-enveloppe,
d) au moins un éther polyalkylène aliphatique, qui porte un groupe amino à chaque extrémité de chaîne,
**caractérisée en ce que** le composant d) est différent du composant b) et est sélectionné parmi les homo- ou copolymères de tétrahydrofuranne, qui portent des groupes d'extrémité amino aliphatiques et qui possèdent une masse molaire moyenne d'au moins 1 800, déterminée à l'aide de GPC et rapportée à la norme de polyéthylène glycol.

2. Masse durcissable à deux composants selon la revendication 1, **caractérisée en ce qu'**au moins un époxyde a) est liquide à 22 °C et à pression normale.

3. Masse durcissable à deux composants selon l'une quelconque des revendications 1 ou 2, **caractérisée en ce que** le composant b) est sélectionné parmi
i) des polyalkylènes glycol linéaires, di- ou trifonctionnels à terminaison amino, sur la base d'oxyde d'éthylène et/ou d'oxyde de propylène.
ii) des polyamidoamines ainsi que leurs dérivés et
iii) des polyamines cycloaliphatiques
ainsi que leurs mélanges.

4. Masse durcissable à deux composants selon l'une quelconque des revendications 1 à 3, **caractérisée en ce que** l'on utilisera un mélange d'au moins deux, de préférence au moins trois amines différents en tant que composant b).

5. Masse durcissable à deux composants selon la revendication 4, **caractérisée en ce que** les amines du mélange sont sélectionnées parmi la 3,3'-oxybis(éthylènoxy)bispropylamine, la polyamidoamine et l'isophoronediamine.

6. Masse durcissable à deux composants selon l'une quelconque ou plusieurs des revendications 1 à 5, **caractérisée en ce que** les particules dotées d'une structure noyau-enveloppe c) s'avèrent être des particules de caoutchouc dotées d'une structure noyau-enveloppe, qui possèdent un noyau de type caoutchouc et une enveloppe constituée de polymères organiques.

7. Masse durcissable à deux composants selon la revendication 6, **caractérisée en ce que** les particules de caoutchouc dotées d'une structure noyau-enveloppe possèdent un noyau constitué d'un matériau polymère avec une température de transition vitreuse inférieure à 0 °C et une enveloppe constituée d'un matériau polymère avec une température de transition vitreuse supérieure à 25 °C.

8. Masse durcissable à deux composants selon l'une quelconque ou plusieurs des revendications 1 à 7, **caractérisée en ce qu'**elle contient de plus au moins un agent propulseur, de préférence avec une proportion, rapportée à l'ensemble de la masse à deux composants, de 0,1 à 10 % en poids, de préférence de 0,5 à 5 % en poids.

9. Masse durcissable à deux composants selon l'une quelconque ou plusieurs des revendications 1 à 8, **caractérisée en ce qu'**elle contient les différents composants dans les plages de proportions en % en poids suivantes, rapportées à la masse totale des deux composants de la masse durcissable :
a) au moins un époxyde : 20 - 70 %, de préférence 30 à 50 %
b) au moins un durcissant réactif à température ambiante pour l'époxyde : 5 à 25 %, de préférence 8 à 18 %
c) des particules dotées d'une structure noyau-enveloppe : 5 - 25 %, de préférence 10 - 15 %
d) au moins un poly(alkylèneéther), qui porte un groupe amino aliphatique à chaque extrémité de chaîne : 3 - 30 %, de préférence 5 à 20 %
e) le cas échéant, d'autres additifs ou principes actifs, dont un agent propulseur, rapporté à l'ensemble de la masse à deux composants, 0,5 à 10 % en poids, de préférence 1 à 5 % en poids
dans laquelle les proportions des différents composants s'additionnent jusqu'à 100 % et un.

10. Masse durcissable à deux composants selon l'une quelconque ou plusieurs des revendications 1 à 9, **caractérisée en ce qu'**elle est constituée, avant le mélange, d'un composant A et d'un composant B séparé de celui-ci, dans laquelle le composant A contient l'époxyde et les particules avec une structure en noyau-enveloppe et le composant B contient le durcissant réactif à température ambiante pour l'époxyde et le poly(alkylèneéther), qui porte un groupe amino aliphatique à chaque extrémité de chaîne.

11. Utilisation d'une masse durcissable à deux composants selon l'une quelconque ou plusieurs des revendications 1 à 10 pour le collage de pièces à assembler lors de la réparation de véhicule automobile.

12. Utilisation selon la revendication 11, dans laquelle l'on laisse durcir la colle à une température ambiante comprise dans une plage de 10 à 30 °C.

13. Utilisation d'une masse durcissable à deux composants selon l'une quelconque ou plusieurs des revendications 8 à 10, qui contient au moins un agent propulseur, en tant que mousse structurelle pour le renforcement ou la rigidification de structures creuses, notamment dans la construction automobile.
